**Europäisches Patentamt**

**European Patent Office**

**Office européen des brevets**

(11) Veröffentlichungsnummer : **0 396 811 B1**

(12) **EUROPÄISCHE PATENTSCHRIFT**

(45) Veröffentlichungstag der Patentschrift :
**02.09.92 Patentblatt 92/36**

(51) Int. Cl.⁵ : **G01H 9/00**

(21) Anmeldenummer : **89108609.2**

(22) Anmeldetag : **12.05.89**

(54) **Verfahren und Vorrichtung zur phasengenauen Abbildung und Vermessung elastischer Wellenfelder mit einer Lasersonde.**

(43) Veröffentlichungstag der Anmeldung :
**14.11.90 Patentblatt 90/46**

(45) Bekanntmachung des Hinweises auf die
Patenterteilung :
**02.09.92 Patentblatt 92/36**

(84) Benannte Vertragsstaaten :
**DE FR GB IT NL**

(56) Entgegenhaltungen :
**IEEE TRANSACTIONS ON SONICS AND UL-
TRASONICS, Band SU-25, Nr. 6, November
1978, Seiten 372-377, IEEE, New York, US; H.
ENGAN:"Phase sensitive laser probe for
high-frequency surface acoustic wave measurements"
ELECTRONICS LETTERS, Band 10, Nr. 15, 25.
Juli 1974, Seiten 297-299, Hitchen, GB; J. ROU-
VAEN et al.: "Wavefront visualisationof acoustic surface waves"**

(73) Patentinhaber : **SIEMENS
AKTIENGESELLSCHAFT
Wittelsbacherplatz 2
W-8000 München 2 (DE)**

(72) Erfinder : **Sölkner, Gerald, Dipl.-Ing. Dr.
Naupliaallee 12
W-8012 Ottobrunn (DE)**

## Beschreibung

Die Erfindung betrifft ein Verfahren zur phasengenauen Abbildung und Vermessung elastischer Wellenfelder nach dem Oberbegriff des Patentanspruchs 1 sowie eine Vorrichtung zur Durchführung des Verfahrens nach dem Oberbegriff des Patentanspruchs 6.

Bauelemente, in denen elastische Wellen, insbesondere akustische Oberflächenwellen, durch Wandlerstrukturen auf piezoelektrischen Materialen angeregt und detektiert werden, gewinnen in der Nachrichten- und Hochfrequenztechnik zunehmend an Bedeutung, zumal die Planartechnologie eine sehr genaue und preiswerte Herstellung dieser mit Hilfe der Methoden des Computer Aided Design (CAD) optimierten Systeme erlaubt. Da die zur Berechnung der Wellenausbreitung verwendeten Modelle nicht alle physikalischen Effekte (Reflexionen an Kanten, Beugungserscheinung usw.) berücksichtigen, ergeben sich häufig Abweichungen zwischen realisiertem und gewünschtem Bausteinverhalten. Zur Verbesserung der CAD-Modelle ist es daher notwendig, das Wellenfeld im Bauelement phasengenau abzubilden bzw. die die elastische Welle charakterisierenden Parameter (Amplitude, Phase, Ausbreitungsgeschwindigkeit) ortsaufgelöst zu messen.

Aus IEEE Transactions on Sonics and Ultrasonics, Vol. SU-25 No. 6 (1978) S. 372 - 377 ist ein Verfahren zur Abbildung akustischer Oberflächenwellenfelder bekannt, bei dem das OFW-Bauelement punktweise mit einem intensitätsmodulierten Laserstrahl abgetastet wird. Die Abbildung eines großen Wellenfeldes ist äußerst zeitaufwendig, da die Meßwerterfassung an jeder der Abtaststellen jeweils einige Sekunden erfordert.

Der Erfindung liegt die Aufgabe zugrunde, ein Verfahren der eingangs genannten Art anzugeben, mit dem auch ausgedehnte Wellenfelder in erheblich kürzerer Zeit phasengenau abgebildet und vermessen werden können. Außerdem soll eine Vorrichtung zur Durchführung des Verfahrens angegeben werden, wobei diese Vorrichtung eine sehr große Bandbreite aufweisen soll. Diese Aufgaben werden erfindungsgemäß durch ein Verfahren nach Patentanspruch 1 und eine Vorrichtung nach Patentanspruch 6 gelöst.

Der mit der Erfindung erzielbare Vorteil besteht insbesondere darin, daß auch ausgedehnte Wellenfelder in kurzer Zeit abgebildet und vermessen werden können. Außerdem erlaubt die Erfindung Messungen an OFW-Bauelementen, die bei Frequenzen oberhalb von 5 bis 10 GHz arbeiten.

Die Erfindung wird im folgenden anhand der Zeichnungen erläutert. Hierbei zeigt:

Fig. 1 ein Ausführungsbeispiel einer Vorrichtung zur Durchführung des erfindungsgemäßen Verfahrens

Fig. 2 das akustische Wellenfeld in einem OFW-Bandpaßfilter

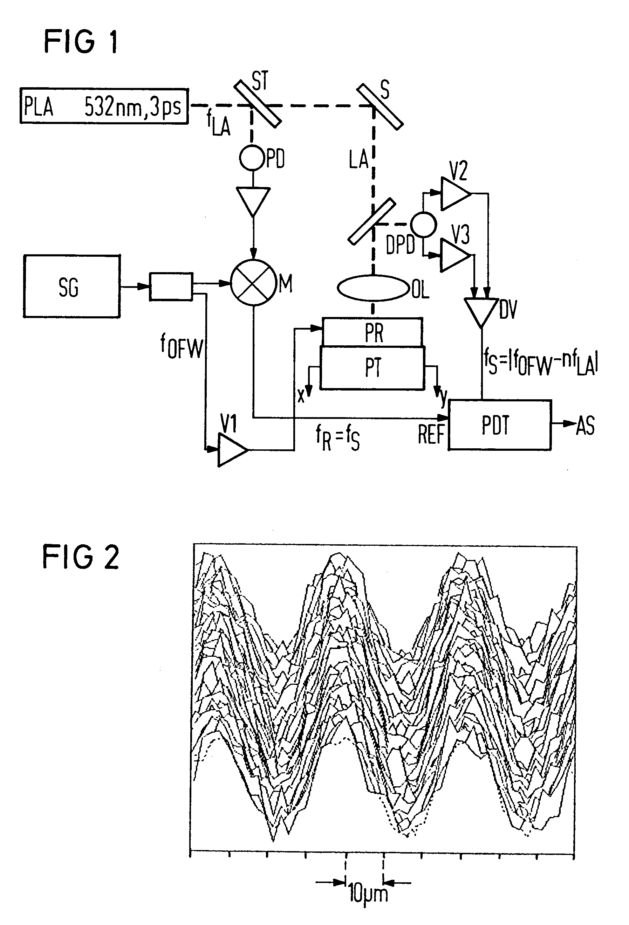

Die Fig. 1 zeigt den schematischen Aufbau einer Vorrichtung zur phasengenauen Messung der Amplitude akustischer Oberflächenwellen in einem auf einem Positioniertisch PT angeordenten OFW-Bauelement PR ( z. B. ZF-Filter, Konvolver oder Impulskompressor), dessen Interdigitalwandler von einem Signalgenerator SG unter Zwischenschaltung eines Verstärkers V1 angesteuert wird. Die an den Elektroden des Wandlers anliegende Wechselspannung der Frequenz $f_{OFW}$ führt über den piezoelektrischen Effekt zu einer periodischen Deformation der Kristalloberfläche, die sich als akustische Welle mit einer Geschwindigkeit von etwa 3000 bis 4000 m/s über das Bauelement PR ausbreitet. Diese Welle, deren Frequenz der Frequenz $f_{OFW}$ des den Wandler ansteuernden Signals entspricht, dringt bis zu einer Tiefe $d \approx \lambda_{OFW}$ ( $\lambda_{OFW}$ : = Wellenlänge der akustischen Oberflächenwelle) in den Kristall ein, wobei die Amplitude der Oberflächenschwingung etwa 0,1 bis 10 Å beträgt. Zum Nachweis der durch die elastische Welle hervorgerufenen Deformation der Oberfläche bedient man sich eines gepulsten Laserstrahls LA, der in einem optischen Impulsgenerator PLA erzeugt, an einem Spiegel S umgelenkt und mit Hilfe eines Linsensystems OL auf das Bauelement PR fokussiert wird. Die Vergrößerung des Linsensystems OL ist hierbei so vorgegeben, daß der Strahldurchmesser d auf dem Kristall der Bedingung

$$d < \lambda_{SAW}$$

genügt.

Der optische Impulsgenerator PLA besteht vorzugsweise aus einem modengekoppelten Nd:YAG-Laser (Spectra-Physics, Modell 3000: $\lambda$ = 1064 nm, Impulsbreite $\tau_p$ = 80 ps, Impulswiederholfrequenz:$f_{LA}$ = 82 MHz), einem Impulskompressor (Spectra-Physics, Modell 3600) zur Verringerung der Breite der Nd:YAG-Laserimpulse auf $\tau_p$<5 ps sowie einem frequenzverdoppelnden KTP-Kristall, der die Wellenlänge der Laserstrahlung auf $\lambda$ = 532 nm halbiert. Die Verwendung dieser Pikosekunden-Laserquelle (Impulsleistung : $W \approx 2$ kW, mittlere Leistung:$\overline{W} \approx 500$ mW) gewährleistet ein hohes zeitliches Auflösungsvermögen, wobei die Zeitstruktur der Laserimpulse ($\tau_p \approx 3$ ps) dem Meßverfahren eine für die Untersuchung moderner OFW-Bauelemente notwendige Bandbreite > 10 GHz verleiht.

Die durch die mechanische Ondulation der Probenoberfläche verursachte Winkelablenkung des reflektierten Laserstrahls wird mit Hilfe eines aus zwei Photodioden und zwei Verstärkern V2, V3 bestehenden Detektors DPT nachgewiesen, dessen Ausgangssignale an den Eingängen eines Differenzverstärkers DV anliegen. Da die Impulswiederholfrequenz $f_{LA}$ der Laserquelle PLA kleiner ist als die Frequenz $f_{OFW}$ der akustischen Oberflächenwellen, weist das dem Eingang des phasenempfindlichen Detektors PDT zugeführte Ausgangssignal des Differenzverstärkers DV eine Frequenz $f_S$ auf, die sich zu

2

EP 0 396 811 B1

$$f_S = |f_{OFW} - nf_{LA}|$$

berechnet (n: natürliche Zahl). Als phasenempfindlicher Detektor PDT kommt insbesondere ein Lock-In-Verstärker in Betracht, an dessen Ausgang ein der Auslenkung der Kristalloberfläche proportionales Signal AS auftritt. Dieses Signal AS wird ortsabhängig aufgezeichnet, wobei man die Ortsinformation, d. h. die Koordinaten der jeweiligen Meßstelle innerhalb des Bauelementes PR, an den entsprechenden Ausgängen x, y des Positioniertisches PT abgreift. Steht eine beispielsweise aus zwei drehbaren Galvanometerspiegeln bestehende Ablenkeinheit zur Positionierung des Laserstrahls LA zur Verfügung, kann man selbstverständlich auch die den Ort der Meßstelle definierenden Ausgangssignale eines die Ablenkeinheit ansteuernden Rastergenerators aufzeichnen.

Das dem phasenempfindlichen Detektor PTD zugeführte Referenzsignal REF erzeugt man in einem Mischer M, der eingangsseitig mit dem verstärkten Ausgangssignal einer Photodiode PD und dem Ausgangssignal des den Baustein PR ansteuernden Generators SG beaufschlagt ist. Da sich die Intensität des auf die Photodiode PD auftreffenden Laserstrahls (diesen erzeugt man mit Hilfe des Strahlteilers ST) mit der durch die Laserquelle PLA vorgegebenen Impulswiederhohlfrequenz $f_{LA}$ ändert, erzeugt der Mischer M ein Referenzsignal REF, dessen Frequenz $f_R$ der Frequenz $f_S$ des Ausgangssignals des Differenzverstärkers DV entspricht. Beide Signale besitzen eine für die jeweilige Meßstelle zeitlich konstante Phasenverschiebung, deren Betrag vom Ort der Meßstelle innerhalb des Bauelementes PR abhängt.

Ein mit der erfindungsgemäßen Vorrichtung gewonnenes Bild des akustischen Wellenfeldes in einem mit einer Sinusspannung der Frequenz $f_{OFW} = 110$ MHz angesteuerten OFW-Bandpaßfilters ist schematisch in Fig. 2 dargestellt. Die Meßzeit zur Aufzeichnung dieses aus 50 x 50 Abtastpunkten aufgebauten Bildes (Abtastfeld: 100 µm x 100 µm, x/y-Schrittweite: 2 µm , Integrationszeit pro Abtastpunkt: 50 m/s) betrug etwa 120 sec. Sie kann allerdings noch erheblich reduziert werden, wenn man den Positionswechsel nicht durch mechanische Verschiebung des Bauelementes PR, sondern durch schnelle Ablenkung des Laserstrahls LA vornimmt. Da die Meßwerterfassung infolge des hohen Signal-Rauschverhältnisses jeweils nur wenige ms erfordert (bei dem bekannten Verfahren beträgt die durchschnittliche Verweildauer des Laserstrahls auf einer Meßstelle etwa 8 sec.) erlaubt die Erfindung insbesondere die Verwendung der in Rasterlasermikroskopen eingesetzten schnellen Ablenksysteme.

Die Erfindung ist nicht auf die beschriebenen Ausführungsbeispiele beschränkt. So ist es ohne weiteres möglich, den Lock-in-Verstärker durch eine Sample-and-Hold-Schaltung zu ersetzen. Zur Ansteuerung der Torschaltung (Gate) verwendet man vorzugsweise ein flankengetriggertes Monoflop, an dessen Eingang das vom Mischer M erzeugte Referenzsignal REF anliegt. Der phasenempfindliche Detektor PDT kann insbesondere in Form einer Boxcareinheit realiert sein.

## Patentansprüche

1. Verfahren zur phasengenauen Abbildung und Vermessung elastischer Wellenfelder mit einer Lasersonde bei dem elastische Wellen auf einer Probe (PR) angeregt werden, bei dem ein Laserstrahl (LA) auf die Probenoberfläche gerichtet wird, bei dem die durch eine Ondulation der Probenoberfläche verursachte Ablenkung des reflektierten Laserstrahls detektiert wird und bei dem ein der Ondulation proportionales Meßsignal erzeugt wird, **dadurch gekennzeichnet,** daß ein gepulster Laserstrahl (LA) verwendet wird, dessen Impulswiederhohlfrequenz $f_{LA}$ kleiner ist als die Frequenz $f_{OFW}$ der elastischen Wellen, daß ein Referenzsignal (REF) der Frequenz $f_R = |f_{OFW} - nf_{LA}|$ erzeugt wird, wobei n eine natürliche Zahl bezeichnet und daß die Amplitude (AS) des Meßsignals unter Heranziehung des Referenzsignals phasenempfindlich bestimmt und aufgezeichnet wird.

2. Verfahren nach Anspruch 1, **dadurch gekennzeichnet,** daß das Referenzsignal durch Mischung eines die Frequenz ($f_{OFW}$) der elastischen Wellen aufweisenden ersten Signals und eines die Impulswiederhohlfrequenz ($f_{LA}$) des Laserstrahls (LA) aufweisenden zweiten Signals erzeugt wird.

3. Verfahren nach Anspruch 2, **dadurch gekennzeichnet,** daß der Laserstrahl (LA) in zwei Teilstrahlen aufgespalten wird, daß einer der Teilstrahlen auf einen Strahlungsdetektor (PD) gerichtet wird und daß ein Ausgangssignal des Strahlungsdetektors (PD) das zweite Signal bestimmt.

4. Verfahren nach Anspruch 2 oder 3,

3

**dadurch gekennzeichnet,** daß das erste Signal zur Ansteuerung einer die elastischen Wellen erzeugenden Wandlerstruktur herangezogen wird.

5. Verfahren nach einem der Ansprüche 1 bis 4,
   **dadurch gekennzeichnet,** daß die Probenoberfläche punktweise mit dem Laserstrahl (LA) abgetastet wird und daß die Amplitude (AS) des Meßsignals ortsabhängig aufgezeichnet wird.

6. Vorrichtung zur phasengenauen Abbildung und Vermessung elastischer Wellenfelder mit einer Lasersonde, mit einer Einrichtung zur Erzeugung elastischer Wellen auf einer Probe (PR), mit einer Laserstrahlquelle (PLA), mit einem optischen System (OL) zur Fokussierung des Laserstrahls (LA) auf die Probenoberfläche, mit einem ersten Strahlungsdetektor (DPD) zum Nachweis der durch die Ondulation der Probenoberfläche hervorgerufenen Ablenkung des reflektierten Laserstrahls (LA) und mit einer Einrichtung (DV) zur Erzeugung eines der Ondulation proportionalen Meßsignals,
   **gekennzeichnet durch** einen optischen Impulsgenerator (PLA), dessen Impulswiederhohlfrequenz ($f_{LA}$) kleiner ist als die Frequenz ($f_{OFW}$) eines die Einrichtung zur Erzeugung der elastischen Wellen ansteuerenden ersten Signals, einen phasenempfindlichen Detektor (PDT), dessen erster Eingang mit dem Meßsignal beaufschlagt ist, einen ausgangsseitig mit einem Referenzeingang des phasenempfindlichen Detektors (PDT) verbundenen Mischer (M), dessen erster Eingang mit dem ersten Signal beaufschlagt ist und dessen zweiter Eingang mit einem zweiten Signal beaufschlagt ist, wobei die Frequenz des zweiten Signals der Impulswiederhohlfrequenz ($f_{LA}$) des optischen Impulsgenerators (PLA) entspricht.

7. Vorrichtung nach Anspruch 6,
   **dadurch gekennzeichnet,** daß der zweite Eingang des Mischers (M) mit einem Ausgang eines mit dem Laserstrahl (LA) beaufschlagten zweiten Strahlungsdetektors (PD) verbunden ist.

8. Vorrichtung nach Anspruch 6 oder 7,
   **dadurch gekennzeichnet,** daß der erste Strahlungsdetektor (DPD) zwei Photodioden aufweist.

9. Vorrichtung nach Anspruch 8,
   **dadurch gekennzeichnet,** daß die Einrichtung zur Erzeugung des Meßsignals einen eingangsseitig mit den Ausgangssignalen der Photodioden beaufschlagten Differenzverstärker (DV) aufweist.

10. Vorrichtung nach einem der Ansprüche 6 bis 9,
    **gekennzeichnet durch** eine Einrichtung (PT) zur Änderung der Position des Lasersstrahls (LA) auf der Probenoberfläche.

11. Vorrichtung nach einem der Ansprüche 6 bis 10,
    **gekennzeichnet durch** eine Pikosekunden-Laserquelle als optischer Impulsgenerator (PLA).

## Claims

1. Method for the phase-accurate imaging and measuring of elastic wave fields, having a laser probe, in which method elastic waves are excited on a specimen (PR), in which method a laser beam (LA) is directed onto the surface of the specimen, in which method the deflection, caused by an undulation of the surface of the specimen, of the reflected laser beam is detected, and in which method a measurement signal proportional to the undulation is generated, characterised in that a pulsed laser beam (LA) is used, the pulse repetition frequency $f_{LA}$ of which is lower than the frequency $f_{OFW}$ of the elastic waves, in that a reference signal (REF) of the frequency $f_R = |f_{OFW} - nf_{LA}|$ is generated, where n designates a natural number, and in that the amplitude (AS) of the measurement signal is determined in a phase-sensitive manner utilising the reference signal and is recorded.

2. Method according to Claim 1, characterised in that the reference signal is generated by mixing a first signal exhibiting the frequency ($f_{OFW}$) of the elastic waves and a second signal exhibiting the pulse repetition frequency ($f_{LA}$) of the laser beam (LA).

3. Method according to Claim 2, characterised in that the laser beam (LA) is split up into two partial beams, in that one of the partial beams is directed onto a radiation detector (PD), and in that an output signal of the radiation detector (PD) determines the second signal.

4. Method according to Claim 2 or 3, characterised in that the first signal is utilised to drive a transducer structure generating the elastic waves.

5. Method according to one of Claims 1 to 4, characterised in that the surface of the specimen is scanned point-by-point by the laser beam (LA), and in that the amplitude (AS) of the measurement signal is recorded in a position-dependent manner.

6. Apparatus for the phase-accurate imaging and measuring of elastic wave fields, having a laser probe, having a device for the generation of elastic waves on a specimen (Pr), having a laser beam source (PLA), having an optical system (OL) to focus the laser beam (LA) onto the surface of the specimen, having a first radiation detector (DPD) to detect the deflection, caused by the undulation of the surface of the specimen, of the reflected laser beam (LA), and having a device (DV) for the generation of a measurement signal proportional to the undulation, characterised by an optical pulse generator (PLA), the pulse repetition frequency ($f_{LA}$) of which is lower than the frequency ($f_{OFW}$) of a first signal driving the device for the generation of the elastic waves, a phase-sensitive detector (PDT), the first input of which receives the measurement signal, a mixer (M) which is connected on the output side to a reference input of the phase-sensitive detector (PDT) and the first input of which receives the first signal and the second input of which receives a second signal, the frequency of the second signal corresponding to the pulse repetition frequency ($f_{LA}$) of the optical pulse generator (PLA).

7. Apparatus according to Claim 6, characterised in that the second input of the mixer (M) is connected to an output of a second radiation detector (PD) receiving the laser beam (LA).

8. Apparatus according to Claim 6 or 7, characterised in that the first radiation detector (DPD) exhibits two photodiodes.

9. Apparatus according to Claim 8, characterised in that the device for the generation of the measurement signal exhibits a differential amplifier (DV) which receives, on the input side, the output signals of the photodiodes.

10. Apparatus according to one of Claims 6 to 9, characterised by a device (PT) for changing the position of the laser beam (LA) on the surface of the specimen.

11. Apparatus according to one of Claims 6 to 10, characterised by a picosecond laser source as the optical pulse generator (PLA).

## Revendications

1. Procédé de formation de l'image et de mesure, d'une manière précise du point de vue de la phase, de champs d'ondes élastiques à l'aide d'une sonde laser, dans lequel des ondes élastiques sont déclenchées sur un échantillon (PR), et selon lequel on dirige un faisceau laser (LA) sur la surface de l'échantillon, on détecte la déviation, provoquée par une ondulation de la surface de l'échantillon, du faisceau laser réfléchi, et on forme un signal de mesure proportionnel à l'ondulation, caractérisé par le fait qu'on utilise un faisceau laser pulsé (LA), dont la fréquence de répétition des impulsions $f_{LA}$ est inférieure à la fréquence $f_{OFW}$ des ondes élastiques, qu'on produit un signal de référence (REF) possédant les fréquences $f_R = |f_{OFW} - nf_{LA}|$, n étant un nombre naturel, et que l'amplitude (AS) du signal de mesure est déterminée et enregistrée, d'une manière sensible à la phase, moyennant l'utilisation du signal de référence.

2. Procédé suivant la revendication 1, caractérisé par le fait que le signal de référence est formé par mélange d'un premier signal, qui possède la fréquence ($f_{OFW}$) des ondes élastiques et d'un second signal, qui possède la fréquence ($f_{LA}$) de répétition des impulsions du faisceau laser (LA).

3. Procédé suivant la revendication 2, caractérisé par le fait que le faisceau laser (LA) est subdivisé en deux faisceaux partiels, que l'un des faisceaux partiels est dirigé sur un détecteur de rayonnement (PD) et qu'un signal de sortie du détecteur de rayonnement (PD) détermine le second signal.

4. Procédé suivant la revendication 1 ou 2, caractérisé par le fait que le premier signal est utilisé pour commander une structure de transducteur qui produit les ondes élastiques.

5. Procédé suivant l'une des revendications 1 à 4, caractérisé par le fait que la surface de l'échantillon est explorée par balayage point par point par le faisceau laser (LA) et que l'amplitude (AS) du signal de mesure est enregistrée en fonction du lieu.

6. Dispositif de formation de l'image et de mesure, précises du point de vue de la phase, de champs d'ondes élastiques comportant une sonde laser, un dispositif pour envoyer des ondes élastiques sur un échantillon (PR), une source de faisceau laser (PLA), un système optique (OL) pour focaliser le faisceau laser (LA) sur la surface de l'échantillon, un premier détecteur de rayonnement (DPD) pour détecter la déviation, provoquée par l'ondulation de la surface de l'échantillon, du faisceau laser réfléchi (LA) et un dispositif (DV) pour produire un signal de mesure proportionnel à l'ondulation, caractérisé par un générateur optique d'impulsions (PLA), dont la fréquence de répétition des impulsions ($f_{LA}$) est inférieure à la fréquence ($f_{OFW}$) d'un premier signal qui commande le dispositif servant à produire les ondes élastiques, par un détecteur (PDT) sensible à la phase et dont la première entrée reçoit le signal de mesure, par un mélangeur (M) raccordé, côté sortie, à une entrée de référence du détecteur (PDT) sensible à la phase et dont la première entrée reçoit le premier signal et dont la seconde entrée reçoit un second signal, la fréquence du second signal correspondant à la fréquence ($f_{LA}$) de répétition des impulsions du générateur optique d'impulsions (PLA).

7. Dispositif suivant la revendication 6, caractérisé par le fait que la seconde entrée du mélangeur (M) est raccordée à une sortie d'un second détecteur de rayonnement (PD) qui est chargé par le faisceau laser (LA).

8. Dispositif suivant la revendication 6 ou 7, caractérisé par le fait que le premier détecteur de rayonnement (DPD) possède deux photodiodes.

9. Dispositif suivant la revendication 8, caractérisé par le fait que le dispositif servant à produire le signal de mesure comporte un amplificateur différentiel (DV) qui reçoit, sur son côté entrée, les signaux de sortie des photodiodes.

10. Dispositif suivant l'une des revendications 6 à 9, caractérisé par un dispositif (PT) pour modifier la position du faisceau laser (LA) à la surface de l'échantillon.

11. Dispositif suivant l'une des revendications 6 à 10, caractérisé par une source laser fournissant des impulsions de l'ordre de la picoseconde en tant que générateur otique d'impulsions (PLA).

## FIG 1

## FIG 2

10µm